(19) **Europäisches Patentamt / European Patent Office / Office européen des brevets**

(11) **EP 2 910 983 B1**

(12) **EUROPEAN PATENT SPECIFICATION**

(45) Date of publication and mention
of the grant of the patent:
**19.07.2017 Bulletin 2017/29**

(51) Int Cl.:
***G01V 8/14*** (2006.01)

(21) Application number: **14197665.4**

(22) Date of filing: **12.12.2014**

(54) **PHOTOELECTRIC SENSOR**

FOTOELEKTRISCHER SENSOR

CAPTEUR PHOTO-ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2014 JP 2014032387**

(43) Date of publication of application:
**26.08.2015 Bulletin 2015/35**

(73) Proprietor: **OMRON CORPORATION
Kyoto, Kyoto 600-8530 (JP)**

(72) Inventor: **Uetsuji, Yasuhito
Kyoto Kyoto 600-8530 (JP)**

(74) Representative: **Horn Kleimann Waitzhofer
Patentanwälte PartG mbB
Ganghoferstrasse 29a
80339 München (DE)**

(56) References cited:
**DE-A1- 4 408 294     DE-A1- 19 910 321
US-A- 3 759 616      US-A- 4 283 146**

- **CHARLES H CHANDLER: "Simple Optics for
Photoelectric Control", MACHINE DESIGN,, vol.
45, no. 23, 20 September 1993 (1993-09-20), pages
140-145, XP001352165,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 910 983 B1

**Description**

FIELD

The present invention relates to a photoelectric sensor.

BACKGROUND

JP H6-16832U discloses an example of a conventional photoelectric sensor. In this photoelectric sensor, at least one of a light projector and a light receiver is provided with two slits that are arranged facing each other at a predetermined distance. A lens is arranged between that light projector/light receiver and the two slits. These two slits realize a reduction in the directivity angle of the light emitted from the light projector, or the light that is incident on the light receiver (hereinafter, light emitted from the light projector and light that is incident on the light receiver are collectively referred to as "detection light").

US 3,759,616A discloses an electro-optical distance measuring instrument embodying a non-coherent light emitting diode, the light beam of which is directly amplitude-modulated by an oscillator and delivered to a receiver through the agency of means for mixing the modulation phases, a transmitting objective, and a reflector arranged at the remote end of the measuring path. The aforementioned means for mixing the modulation phases is arranged with respect to the transmitting objective such that the transmitting objective is fully illuminated and the transmitting objective produces an image of the aforementioned means at an infinite distance.

DE 44 08 294 A1 discloses a reflection ligth curtain for recognizing objects within a distance traversed by a light beam. At an end of the distance, there is a sensor having a radiation transmitter and a radiation receiver, while at the other end of the distance, there is a retroreflector on which the radiation is incident.

US 4283,146 discloses an optical detector for the detection of very small objects comprises a first optical system defining an optical path and being operable to transmit electromagnetic radiation onto an object to be detected; a second optical system defining an optical path parallel to said optical path of said first optical system and being operable to receive said electromagnetic radiation after diffusion and reflection by said object; and a converging lens associated in common with said first and second optical systems and arranged such that said optical paths of said first and second optical systems are parallel to and symmetrical about the axis of said converging lens on one side thereof.

SUMMARY

However, in the photoelectric sensor according to JP H6-16832U, the apertures of the two slits have the same shape. Accordingly, as a detection region that is predetermined for detecting a target object moves away from the slits, the detection range of the target object on a plane that is orthogonal to the optical axis of the lens becomes wider. However, in some uses, in the detection region that has a range that is required in view of the product specification in the direction of the optical axis, there is also a request for making the detection range smaller than the range required in view of the product specification, irrespective of the distance from the light projector or the light receiver. It is therefore an object of the present invention to provide a photoelectric sensor in which the detection range can be made smaller than the required range, irrespective of the distance from the light projector or the light receiver.

The photoelectric sensor according to a first aspect of the present invention includes the features recited in claim 1.

The photoelectric sensor may be a retro-reflective type photoelectric sensor for use in combination with a retro-reflective plate. The retro-reflective type photoelectric sensor may include, between the second diaphragm and the lens, a semi-transparent plate that transmits and reflects respective parts of the detection light from the light source and the detection light from the detection region.

The first diaphragm may be attachable to and detachable from the second diaphragm.

The photoelectric sensor may further include light condensing means for condensing the detection light toward the first diaphragm, the light condensing means being provided between the first diaphragm and the light source.

The present invention includes the first diaphragm and the second diaphragm that are provided between the light source and the lens. The first diaphragm is arranged at a position that is closer to the light source than the second diaphragm. Furthermore, the aperture size of the first diaphragm in a cross section including the optical axis of the lens is larger than the aperture size of the second diaphragm in the cross section including the optical axis. Accordingly, it is possible to provide a photoelectric sensor that can make a detection range for detecting a detection target, in the detection region, smaller than a predetermined size. A virtual light source is given by an aperture section of a composite diaphragm constituted by the first diaphragm and the second diaphragm in a cross section (C-C) that is orthogonal to the optical axis. The distance (La) in the direction of the optical axis between this virtual light source and a principal point of the lens may be 1 to 50 mm, for example. Furthermore, the virtual light source may have a size (Wa) of 0.05 to 0.8 mm, for example. Furthermore, the maximum light flux passing space may forms a circular truncated cone having a height (H) of 0.1 to 1.5 mm, for example.

BRIEF DESCRIPTION OF THE DRAWINGS

FIG. 1 shows a basic configuration of the optical system of a photoelectric sensor according to a first embodiment.
FIG. 2 shows a specific example of a composite diaphragm and a latch member of the composite diaphragm.
FIG. 3 is an enlarged view of a range from a light source of the photoelectric sensor to a lens thereof.
FIG. 4 is a diagram illustrating an example of the composite diaphragm.
FIG. 5 is a diagram illustrating the aperture sizes of the composite diaphragm.
FIG. 6 is a diagram illustrating an example of the composite diaphragm.
FIG. 7 is a diagram illustrating an example of the composite diaphragm.
FIG. 8 shows a basic configuration of the optical system of a photoelectric sensor according to a second embodiment.

DETAILED DESCRIPTION

<First Embodiment>

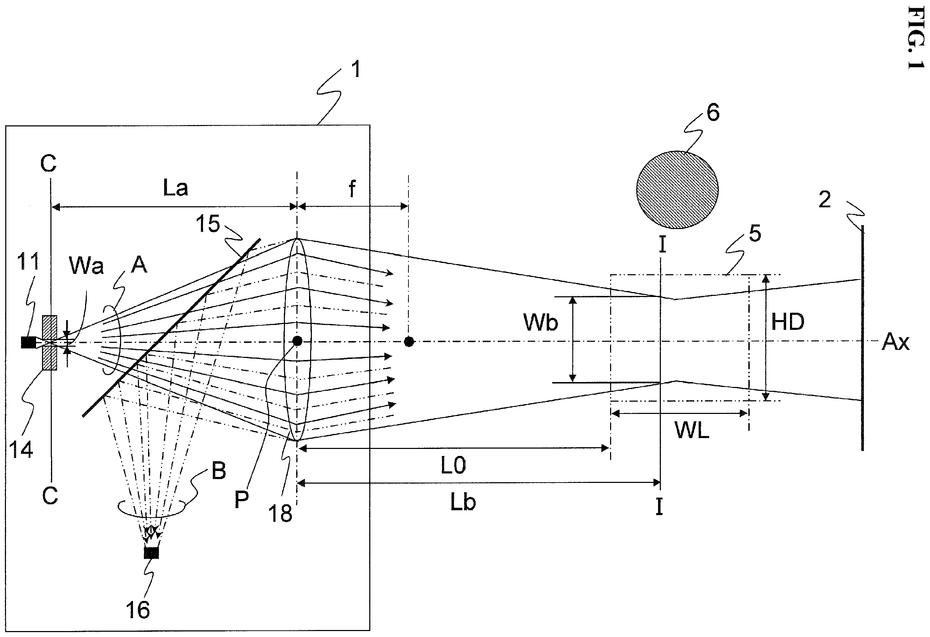

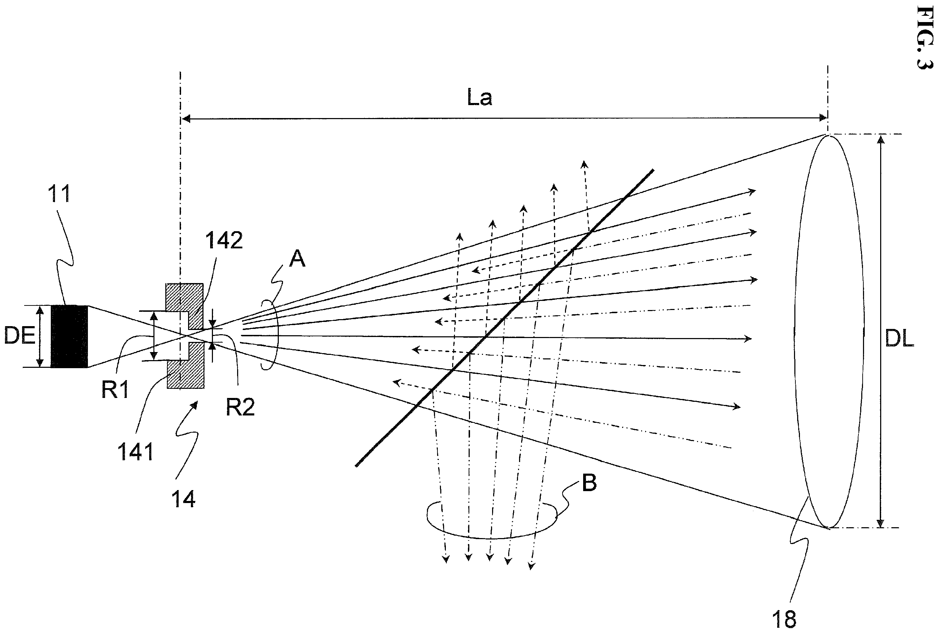

Hereinafter, a photoelectric sensor 1 according to a first embodiment of the present invention will be described with reference to the drawings. FIG. 1 shows a basic configuration of the optical system of the photoelectric sensor 1. FIG. 3 shows an enlarged view of the range from a light source 11 to a lens 18 of the present embodiment.

As shown in FIG. 1, the photoelectric sensor 1 includes the light source 11, a composite diaphragm 14, a semi-transparent plate 15, the lens 18, a retro-reflective plate 2, and a light receiving unit 16. The photoelectric sensor 1 is a so-called retro-reflective type photoelectric sensor that is used together with the retro-reflective plate 2.

The light source 11 emits detection light A for detecting a detection target 6 that is present in a detection region 5. The light source 11 is, for example, a light projecting element such as a light-emitting diode that emits the detection light A.

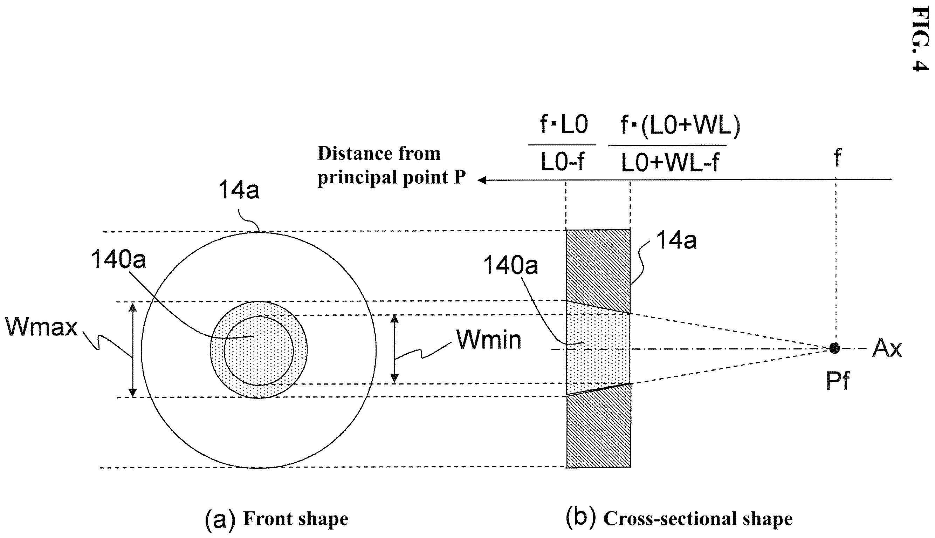

The composite diaphragm 14 restricts spread of the detection light A emitted from the light source 11, and restricts the spot diameter in the detection region 5 whose maximum permissible design spot size is HD in a range in which the distance from a principal point P of the lens 18 in the direction of the optical axis Ax of lens 18, which will be described later, is in the range from L0 to L0 + WL. The composite diaphragm 14 is provided between the light source 11 and the lens 18. More specifically, the composite diaphragm 14 is arranged in the vicinity of the light source 11. Furthermore, the composite diaphragm 14 is arranged closer to the light source 11 than a focal point Pf (see FIGS. 4 to 6) of the two focal points of the later described lens 18, the focal point Pf being closer to the light source 11 than the other.

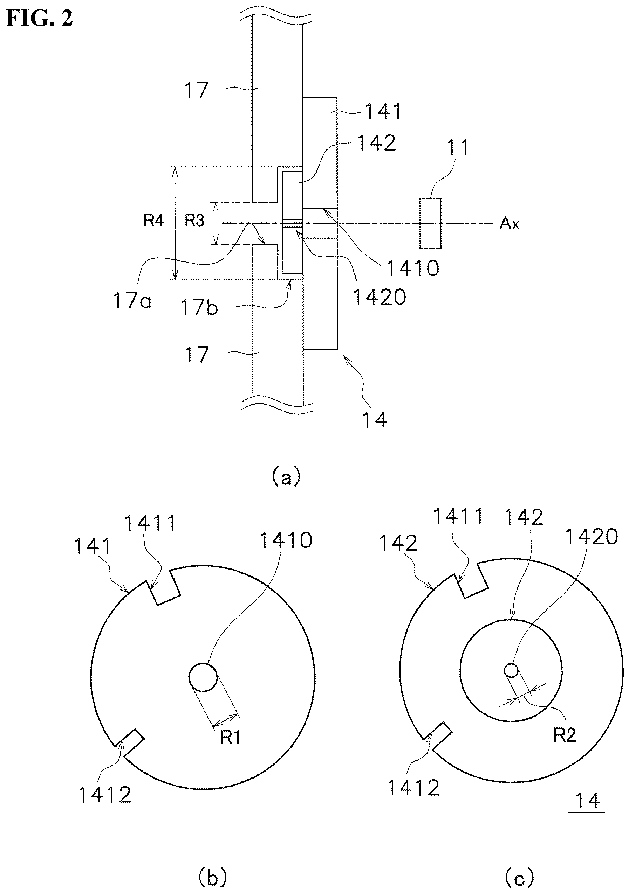

FIG. 2 shows a specific example of the composite diaphragm 14 and a latch member of the composite diaphragm 14. FIG. 2(a) is an enlarged view of the vicinity of the composite diaphragm 14 when seen in a direction that is orthogonal to the optical axis Ax of the later described lens 18. Referring to FIG. 2(a), the composite diaphragm 14 includes a first diaphragm 141 and a second diaphragm 142. The first diaphragm 141 is arranged at a position that is closer to the light source 11 than the second diaphragm 142. FIG. 2(b) is an enlarged view of the first diaphragm 141 when seen in the direction of the optical axis Ax. FIG. 2(c) is an enlarged view of the second diaphragm 142 when seen in the direction of the optical axis Ax. The first diaphragm 141 and the second diaphragm 142 are made from a member having a light blocking effect, such as SUS (stainless steel).

As shown in FIG. 2(b), the first diaphragm 141 is a circular diaphragm having a predetermined diameter. The first diaphragm 141 has a first diaphragm hole 1410 that has a first diaphragm diameter R1. The first diaphragm 141 also has a first cut-out section 1411 and a second cut-out section 1412. The first cut-out section 1411 and the second cut-out section 1412 are formed so as to have different sizes. This makes it possible to prevent the first diaphragm 141 from being mounted on a diaphragm holder 17 the other way around by mistake.

As shown in FIG. 2(c), the second diaphragm 142 is adhered to the first diaphragm 141. The second diaphragm 142 is a circular diaphragm whose diameter is smaller than that of the first diaphragm 141. The second diaphragm 142 has a second diaphragm hole 1420 that has a second diaphragm diameter R2. The second diaphragm diameter R2 is smaller than the first diaphragm diameter R1.

The diaphragm holder 17 has an opening 17a and a recess 17b, as shown in FIG. 2(a). The opening 17a is formed in a circular shape. The recess 17b is also formed in a circular shape. The opening 17a is formed inside the recess 17b, and has a diameter R3 that is smaller than a diameter R4 of the recess 17b. Therefore, the opening 17a and the recess 17b constitute a step shape.

As shown in FIG. 2(a), the second diaphragm 142 is accommodated in the recess 17b of the diaphragm holder 17. The first diaphragm 141 is fixed in close contact with an outer surface of the diaphragm holder 17. The diaphragm holder 17 is provided with two protrusions (not shown) protruding on the first diaphragm 141 side. These two protrusions are fitted into the first cut-out section 1411 and the second cut-out section 1412 of the first diaphragm 141, and the first diaphragm 141 is latched to the diaphragm holder 17. Note that the first diaphragm 141 is latched to the diaphragm holder 17 so that the first diaphragm hole 1410 is coaxial with the opening 17a. The light projecting element 11 is arranged on the side of the first diaphragm 141 that is opposite to the diaphragm holder 17. The arrangement positions and the thicknesses of the first diaphragm 141 and the second diaphragm 142 will be described later.

In the above-described example, the first diaphragm 141 and the second diaphragm 142 respectively have pin holes, that is, circular apertures. However, the first diaphragm 141 and the second diaphragm 142 may respectively have rectangular apertures such as slits. The first diaphragm 141 and the second diaphragm 142 are arranged so that the optical axis Ax of the later described lens 18 passes through the apertures of the first diaphragm 141 and the second diaphragm 142. FIG. 3 is an enlarged view of the range of the photoelectric sensor from the light source to the lens. FIG. 3 shows aperture diameters R1 and R2 of the first diaphragm 141 and the second diaphragm 142 when the first diaphragm 141 and the second diaphragm 142 respectively have pin holes. Referring to FIG. 3, the aperture diameter R1 of the first diaphragm 141 is larger than the aperture diameter R2 of the second diaphragm 142. That is, the aperture size R1 of the first diaphragm 141 in a cross section that includes the optical axis Ax of the lens 18 is larger than the aperture size R2 of the second diaphragm 142 in the cross section that includes the optical axis Ax. Note that "aperture size in a cross section that includes the optical axis Ax" refers to the length of the corresponding aperture in the direction that is orthogonal to the optical axis Ax in the cross section that includes the optical axis Ax of the lens 18.

The diameter DE of a light emitting area of the light source 11 is larger than the aperture diameter R1 of the first diaphragm 141. That is, the effective size DE of the light source 11 in a cross section that includes the optical axis Ax of the lens 18 is larger than the aperture size R1 of the first diaphragm in that cross section. Note here that "effective size of the light source 11 in a cross section that includes the optical axis Ax" does not only mean the length of a light emitting device (e.g., a LED chip) in the light source 11 in that cross section. If all regions of the light source 11 that emit light toward the composite diaphragm 14 are referred to as "light outputting regions", the effective size of the light source 11 in the cross section that includes the optical axis Ax means the length of the light outputting regions in the cross section. That is, if the light source 11 has a light transmission window for transmitting light only from a partial region, using a member such as a stem (e.g. base of the LED chip constituting the light source 11), an effective size of the light source 11 in the cross section means the length of the light transmission window in the cross section. Furthermore, if the light source 11 includes a reflecting member for reflecting light from the light emitting device, the effective size of the light source 11 in the cross section is the sum of the distances between the optical axis and two ends of a third region, which is given by a total regions including a first region, a second region, and a region between the first region and the second region, in that cross section. Here, the first region is a region in that cross section in which the light emitting device is located. The second region is a region in which light emitted from the light emitting device can be reflected by that region and incident on the aperture, of the regions of the reflecting member in that cross section.

The semi-transparent plate 15 transmits and reflects respective parts of the detection light A and return light B, which will be described later. The semi-transparent plate 15 is a so-called half mirror. In FIGS. 1 and 3, the rays of detection light A (that is, the detection light A from the light source 11) that are incident on the semi-transparent plate 15 are indicated by the solid lines, and the rays of return light B are indicated by the alternate long and two short dash lines. In FIG. 3, the rays of detection light A that are tramsmitted through the semi-transparent plate 15 are indicated by the solid lines, and the rays of detection light A that are reflected by the semi-transparent plate 15 are indicated by the dotted lines. In FIG. 3, the rays of return light B that are transmissive through the semi-transparent plate 15 are indicated by the dotted lines, and the rays of return light B that are reflected by the semi-transparent plate 15 are indicated by long-short-short dashed lines.

The lens 18 condenses the detection light A emitted from the light source 11 on the detection region 5. As shown in FIG. 3, the effective diameter DL of the lens is larger than the effective diameter DE of the light source 11. In other words, the effective size DL of the lens 18 in the cross section that includes the optical axis Ax of the lens 18 is larger than the effective size DE of the light source 11 in the cross section that includes the optical axis Ax of the lens 18. Note here that, when a region that generates the effect of the lens is referred to as a "lens effective region", the effective size SL of the lens 18 in the cross section that includes the optical axis Ax of the lens 18 means the length of the lens effective region in the cross section that includes the optical axis Ax of the lens 18. Therefore, a region of the lens 18 on which a member for fixing the lens 18 is mounted and that cannot transmit light, and a region of the lens 18 on which a lens fixing member is mounted and that does not have the lens function are excluded from the lens effective region.

The retro-reflective plate 2 is arranged facing the light source 11, and the detection light A emitted from the light source 11 is reflected on the retro-reflective plate 2 and serves as the return light B. The return light B is the detection light A from the detection region 5. The detection light A is visible light for example, but only needs to be light that is returned by the retro-reflective plate 2, and the wavelength region thereof is not particularly limited. The retro-reflective plate 2 includes a plurality of corner cubes. Incident light is reflected in the retro-reflective plate 2, and then is returned in the same direction as that of the incident light.

The return light B travels in a pathway of the detection light A in the direction opposite to the direction in which the detection light A travels, and is incident on the lens 18. As shown in FIG. 1, the return light B that is transmitted through the lens 18 is reflected by the semi-transparent plate 15 and transferred to the light receiving unit 16.

The light receiving unit 16 receives the return light B. The light receiving unit 16 is a photodiode for example, and an output signal varies depending on the amount of the received return light B. Note that a separate optical device for guiding the return light B, such as a lens, a mirror, or a prism, may also be provided between the semi-transparent plate 15 and the light receiving unit 16.

Hereinafter, the relationship between the shape of the composite diaphragm 14 and the spot diameter in the detection region 5 will be described. The following Formula 1 is given based on the lens formula, where, as shown in FIG. 1, f is the focal point distance of the lens 18, La is the distance in the direction of the optical axis Ax between a virtual light source and the principal point P of the lens 18, and Lb is the distance in the direction of the optical axis Ax between an image plane I-I (the plane that is orthogonal to the optical axis Ax in the detection region 5) and the principal point P. La may be 1 to 50 mm, for example. Note that "virtual light source" refers to, in FIG. 1, an aperture section of the composite diaphragm 14 in the cross section C-C that is orthogonal to the optical axis Ax of the lens 18, the aperture section being located at the distance La from the principal point P of the lens 18 in the direction of the optical axis Ax of the lens 18.

$$\text{Formula 1:} \qquad 1/f = 1 / La + 1 / Lb$$

Furthermore, the following Formula 2 is given, where Wa is the size of the virtual light source (aperture diameter in the cross section C-C), and Wb is the spot size (diameter of the region confined by the spot diameter of the image plane I-I).

$$\text{Formula 2:} \qquad Wb = Lb * Wa / La$$

The size Wa of the virtual light source may be 0.05 to 0.8 mm, for example.

At that time, in order to set the spot size of the detection region 5, which has the distance from the principal point P in the direction of the optical axis Ax of the range from L0 to L0 + WL, to HD or less as shown in FIG. 1, the maximum light flux passing space 140a, which is the maximum space through which the light flux of the detection light A can pass, of the first diaphragm 141 and the second diaphragm142 is determined by the following procedure. First, La is obtained by Formula 1 when Lb is varied from L0 to L0 + WL. Then, Lb and La that are obtained by Formula 1 are substituted in Formula 2, and Wa is obtained so that Wb is less than HD. The maximum light flux passing space 140a is a space representing the entire region on a plane that Wa, obtained in the above-described manner by Formula 2 using La obtained by Formula 1, can take on when Lb is varied from L0 to L0 + WL. That is to say, the maximum light flux passing space 140a for the detection region 5 is the space for which

$$Lb * Wa / La < HD$$

is satisfied when Lb is varied from L0 to L0 + WL, and the relationship between La and Lb is given by Formula 1.

The maximum light flux passing space 140a is a circular truncated cone, as shown in the dotted pattern of FIG. 4, that is formed in the range in which La is from f*(L0+WL)/(L0+WL-f) to f*L0/(L0-f). Note that FIG. 4 shows the focal point Pf of the lens 18 that is closer to the light source 11. Furthermore, FIG. 4(a) is a diagram showing the maximum light flux passing space 140a and a composite diaphragm 14a that are viewed from the light source 11, and FIG. 4(b) is a diagram showing the maximum light flux passing space 140a and the composite diaphragm 14a when seen in the direction orthogonal to the optical axis Ax, the composite diaphragm 14a being described later. A diameter Wmin of the circle of the maximum light flux passing space 140a that is closest to the lens 18 is expressed by Formula 3. Furthermore, a diameter Wmax of the circle of the maximum light flux passing space 140a that is closest to the light source 11 is expressed by Formula 4.

$$\text{Formula 3:} \quad \text{Wmin} = f * HD / (L0 + WL - f)$$

$$\text{Formula 4:} \quad \text{Wmax} = f * HD / (L0 - f)$$

Here, when the composite diaphragm 14 is designed so that the spot size in the detection region 5 is constantly HD, it is preferable to form the composite diaphragm 14a so that the maximum light flux passing space 140a serves as the aperture of the composite diaphragm 14a, as shown by hatching of the cross-sectional shape in FIG. 4. In this case, the composite diaphragm 14a has a circular truncated cone-shaped aperture 140a.

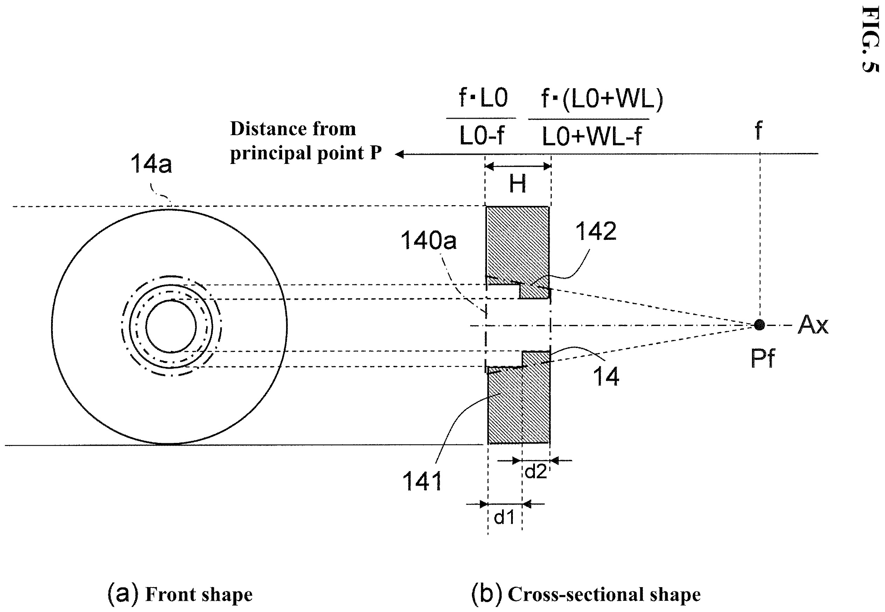

As described above, when the maximum light flux passing space 140a has been obtained, the aperture of the first diaphragm 141 and the aperture of the second diaphragm 142 are designed so that the space obtained by combining the aperture of the first diaphragm 141 and the aperture of the second diaphragm 142 is smaller than the maximum light flux passing space 140a. Accordingly, the spot size in the detection region 5 is smaller than HD. An example of such a composite diaphragm 14 is shown in FIG. 5. In FIG. 5, the outer shape of the maximum light flux passing space 140a is indicated by the alternate long and short dash line. The definitions of FIGS. 5(a) and 5(b) are the same as those of FIGS. 4(a) and 4(b). In FIG. 5, the space obtained by combining the aperture of the first diaphragm 141 and the aperture of the second diaphragm 142 is within the range of the maximum light flux passing space 140a. In this case, the entire light flux of the detection light A that is output from the light source 11 to the outside of the photoelectric sensor 1 passes through the maximum light flux passing space 140a. It is thus possible to set the spot size in the detection region 5 to HD or less.

Note that if the diameter R1 (see FIG. 3) of the aperture of the first diaphragm 141 is smaller than the above-described Wmax and the diameter R2 (see FIG. 3) of the aperture of the second diaphragm 142 is smaller than the above-described Wmin, the length da obtained by adding up the thickness d1 of the first diaphragm 141 and the thickness d2 of the second diaphragm 142 can be smaller than the height H of the circular truncated cone that is formed by the maximum light flux passing space 140a. Note that H is defined by the following Formula 5.

$$\text{Formula 5:} \quad H = f * L0 / (L0 - f) - f * (L0 + WL) / (L0 + WL - f)$$

H may be 0.1 to 1.5 mm.

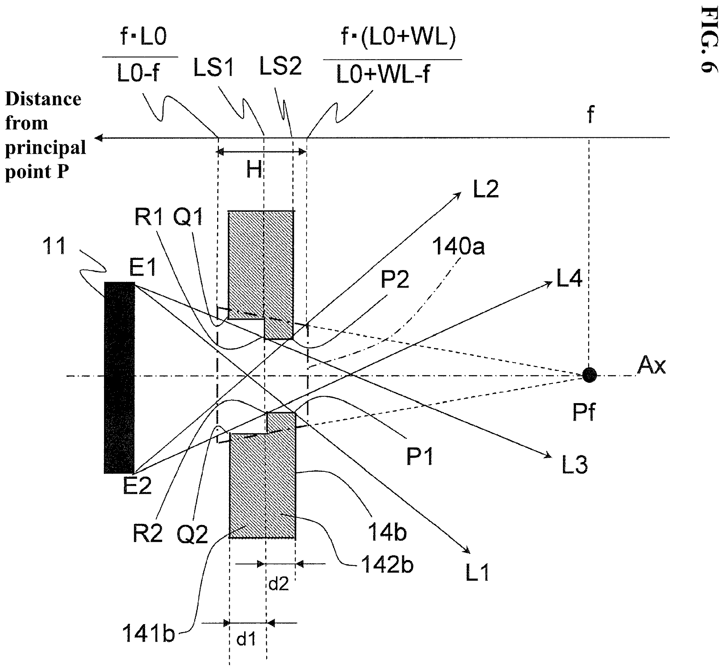

An example of a composite diaphragm 14b in this case is shown in FIG. 6. FIG. 6 is a diagram showing the composite diaphragm 14b and the light source 11 when seen in the direction orthogonal to the optical axis Ax. This composite diaphragm 14b is formed by a first diaphragm 141b and a second diaphragm 142b. The thickness d1 of the first diaphragm 141b, the thickness d2 of the second diaphragm 142b, the aperture diameter of the first diaphragm 141b, the aperture diameter of the second diaphragm 142b, the distance in the direction of the optical axis Ax between the surface on the lens 18 side of the first diaphragm 141b and the principal point P, and the distance in the direction of the optical axis Ax between the surface on the lens 18 side of the second diaphragm 142b and the principal point P are defined so as to satisfy the following two conditions.

Condition 1: Of the light beams that are emitted from both ends of an effective area of the light source 11 in a cross section that includes the optical axis Ax of the lens 18, a light beam that intersects the optical axis Ax and passes by an end on the lens 18 side of the second diaphragm 142b passes through the maximum light flux passing space 140a. FIG. 6 shows an example in which, of the light beams emitted from one end E1 of the effective area of the light source 11 in the cross section, a light beam L1 that intersects the optical axis Ax and passes by an end on the lens 18 side of the second diaphragm 142b (in FIG. 6, that end is shown as P1) passes through the maximum light flux passing space 140a. Similarly, FIG. 6 shows an example in which, of the light beams emitted from the other end E2 of the effective area of the light source 11 in the cross section, a light beam L2 that intersects the optical axis Ax and passes by an end on the lens 18 side of the second diaphragm 142b (in FIG. 6, that end is shown as P2) passes through the maximum light flux passing space 140a. That a light beam "passes by" an edge or end of a diaphragm means that the light beam barely passes through the opening of the diaphgram and tilting the light beam further towards the diaphragm would block the light beam with the diaphragm.

Condition 2: Of the light beams emitted from both ends of the effective area of the light source 11 in a cross section that includes the optical axis Ax of the lens 18, all light beams that intersect the optical axis Ax and pass by an end on the light source 11 side of the first diaphragm 141b or an end on the light source 11 side of the second diaphragm 142b pass through the maximum light flux passing space 140a. FIG. 6 shows an example in which, of the light beams emitted from one end E1 of the effective area of the light source 11 in the cross section, a light beam L3 that intersects the optical axis Ax and passes by an end on the light source 11 side of the first diaphragm 141b (in FIG. 6, that end is shown as Q1) or an end on the light source 11 side of the second diaphragm 142b (in FIG. 6, that end is shown as R1) passes through the maximum light flux passing space 140a. Note that, when the light beam that is emitted from the end E1 of the light source 11 and passes by the end Q1 on the light source 11 side of the first diaphragm 141b intersects the optical axis Ax, the light emitted from the end E1 of the light source 11 does not reach the end R1 on the light source 11 side of the second diaphragm 142b. Furthermore, when the light beam that is emitted from the end E1 of the light source 11 and passes by the end R1 on the light source 11 side of the second diaphragm 142b intersects the optical axis Ax, the light beam that is emitted from the end E1 of the light source 11 and passes by the end R1 on the light source 11 side of the first diaphragm 141b does not reach the optical axis Ax. Similarly, FIG. 6 shows an example in which, of the light beams emitted from the other end E2 of the effective area of the light source 11 in the cross section, a light beam L4 that passes by the end on the light source 11 side of the first diaphragm 141b (in FIG. 6, that end is shown as Q2) or the end on the light source 11 side of the second diaphragm 142b (in FIG. 6, that end is shown as R2) passes through the maximum light flux passing space 140a.

At that time, the entire light flux of the detection light A that is emitted from the light source 11 to the outside of the photoelectric sensor 1 passes through the opening 140a. Therefore, it is possible to set the spot size in the detection region 5, which has the distance from the principal point P in the direction of the optical axis Ax of the range from L0 to L0 + WL, to be HD or less.

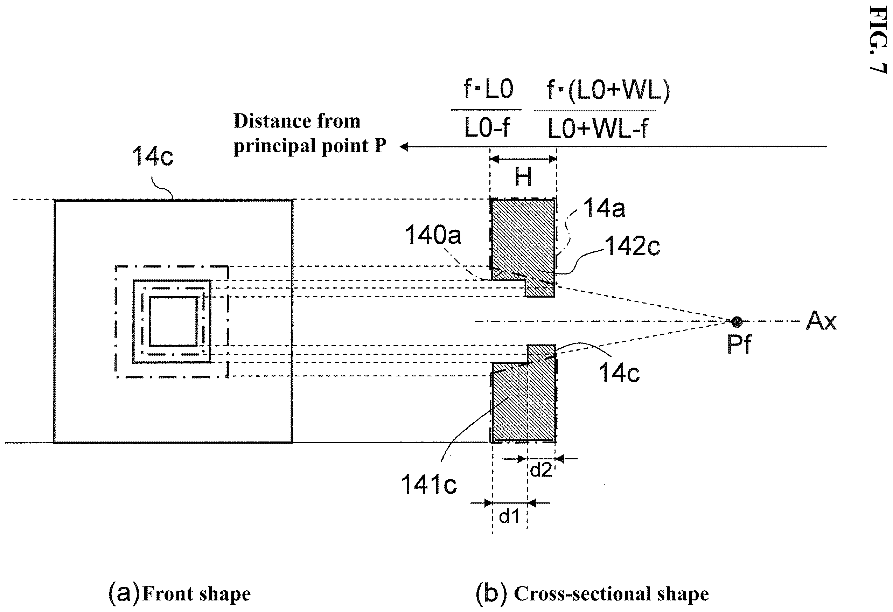

Furthermore, FIGS. 4 to 6 show the cases in which the aperture of the composite diaphragm 14 has the shape of a cylinder, a combination of cylinders, or a circular truncated cone. However, when the detection region 5, which is constituted by cross sections that intersect the optical axis Ax and through which the detection light A passes, has a rectangular cross-sectional shape that is orthogonal to the optical axis Ax, it is also possible to form a composite diaphragm 14 that has the shape of a prism, a combination of prisms, or a truncated pyramid, by designing, using the above described method, the cross-sectional shape of the aperture of the composite diaphragm 14 constituted by that cross sections so that the cross-sectional shape corresponds to the direction of the sides of the rectangle. FIG. 7 shows, as a typical example of this case, a composite diaphragm 14 that has the shape of a combination of prisms. In the example of FIG. 7, the maximum light flux passing space 140a also has the shape of a rectangular truncated pyramid. That is, the shape of the maximum light flux passing space 140a is not limited to the circular truncated cone. Furthermore, the aperture of the composite diaphragm 14 may also have the shape of an elliptic cylinder, a combination of elliptic cylinders, or an elliptic truncated cone. Furthermore, the aperture of the composite diaphragm 14 may also have another shape such as a cylinder with a star structure, a combination of cylinders with a star structure, or a truncated pyramid with a star structure.

<Second Embodiment>

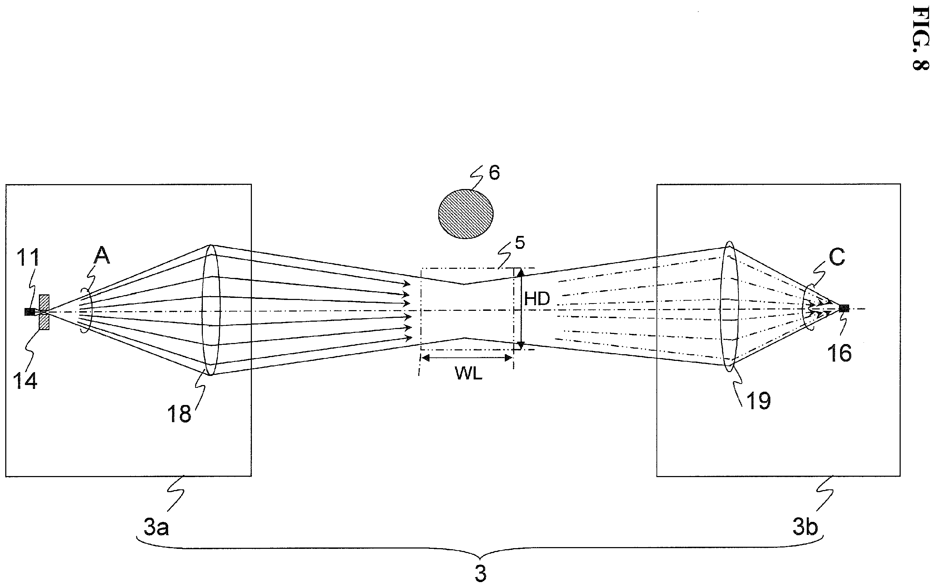

Although the photoelectric sensor 1 according to the first embodiment has been described taking a so-called coaxial reflective type photoelectric sensor as an example, the present invention is also applicable to another type of photoelectric sensor. A second embodiment will describe a case where the present invention is applied to a transmissive type photoelectric sensor. FIG. 8 shows a basic configuration of optical systems of a photoelectric sensor 3 according to the second embodiment.

The photoelectric sensor 3 is a so-called transmissive type photoelectric sensor, and includes a light projector 3a and a light receiver 3b. The light projector 3a corresponds to a photoelectric sensor 1 of the first embodiment that does not include the semi-transparent plate 15 and the light receiving unit 16. Therefore, the light source 11, the composite diaphragm 14, and the lens 18 have the same characteristics as those of the first embodiment. Thus, detailed descriptions of the light source 11, the composite diaphragm 14, and the lens 18 are omitted. The light receiver 3b is provided in place of the retro-reflective plate 2 of the first embodiment. The light projector 3a and the light receiver 3b are arranged so as to sandwich the detection region 5. As shown in FIG. 8, the light projector 3a and the light receiver 3b are arranged facing each other. The optical axis of the lens 18 of the light projector 3a is coincident with the optical axis of a lens 19 of the light receiver 38, the lens 19 being described later. The light receiver 3b receives light emitted from the light projector 3a.

The light receiver 3b includes the light receiving unit 16 and the lens 19. The light receiving unit 16 is the same as the light receiving unit 16 of the first embodiment, and thus a detailed description thereof is omitted. The lens 19 condenses passing light C, which passes through the detection region 5 and is incident on the light receiver 3b, on the light receiving unit 16. The passing light C is detection light from the detection region 5. Note that, in the present embodiment, the lens 19 may also be omitted. Furthermore, the lens 19 does not have the function to restrict the spot size in the detection region 5, and thus a lens parameter may be defined irrespective of the lens 18.

The following will describe the effects of the photoelectric sensors 1 and 3 according to the first and second embodiments. In the above-described composite diaphragm 14, the first diaphragm 141 is arranged at a position that is closer to the light source than the second diaphragm 142, and the aperture size S1 of the first diaphragm 141 in the cross section that includes the optical axis Ax of the lens 18 is larger than the aperture size S2 of the second diaphragm 142 in the cross section that includes the optical axis Ax. Accordingly, it is possible to suppress the spread of the detection light A in the area of the detection region 5 that is remote from the lens 18, as compared with the case of the conventional technique in which two slits have the same aperture size.

Furthermore, in the photoelectric sensors 1 and 3, when the range [L0, L0 + WL] of the distance of the detection region 5 from the principal point P of the lens 18 in the direction of the optical axis Ax of the lens 18, and the upper limit HD of the spot size in the detection region 5 are determined, the frustum-shaped maximum light flux passing space 140a is also determined based thereon. Also, the apertures of the first diaphragm 141 and the second diaphragm 142 are determined so that the entire light flux that is emitted to the outside of the photoelectric sensor 1 (all light fluxes of the detection light A) passes through the maximum light flux passing space 140a. Accordingly, it is possible to determine the shapes of the first diaphragm 141 and the second diaphragm 142 so as to restrict the spot size in the detection region 5 that has the distance in the above-described range to HD.

Although the embodiments of the present invention have been described so far, the present invention is not limited to the above-described embodiments, and various modifications can be made within the scope without departing from the spirit of the invention.

Although the above-described embodiments have been described taking, as examples, the case where the apertures of the first diaphragm 141 and the second diaphragm 142 have the same shape but different sizes, it is also possible that the apertures of the first diaphragm 141 and the second diaphragm 142 have different shapes. For example, the aperture of the first diaphragm 141 may have the shape of a cylinder, and the aperture of the second diaphragm 142 may have the shape of a quadrangular prism. Furthermore, the shapes may be such that the entirety of the aperture of the second diaphragm 142 is not seen from the aperture of the first diaphragm 141 when viewed at the position of the light source 11. That is, a part of the aperture of the second diaphragm 142 may be located outside the aperture of the first diaphragm 141 when seen at the position of the light source 11.

The composite diaphragm 14 may further include, in addition to the first diaphragm 141 and the second diaphragm 142, a diaphragm having a different aperture. When the composite diaphragm 14 is constituted by three diaphragms or more, the thicknesses of two of these diaphragms, the aperture diameters of the two diaphragms, and the distances in the direction of the optical axis Ax between their surfaces on the lens 18 side and the principal point P may be determined so as to satisfy the above-described Condition 1 and Condition 2. The above-described embodiments have described the examples in which the first diaphragm 141 and the second diaphragm 142 are separate components, but they may be formed in one piece. The same applies to the case where the composite diaphragm 14 includes at least three diaphragms having an aperture. Accordingly, it is possible to easily set the shape of the composite diaphragm 14 so that the relationship in the detection region between the distance from the principal point P of the lens 18 in the direction of the optical axis Ax of the lens 18, and the maximum permissible design spot size in the case of that distance are satisfied.

The composite diaphragm 14 may also be such that, similarly to the composite diaphragm 14a, the aperture size in the cross section including the optical axis Ax continuously varies in the direction of the optical axis Ax. The composite diaphragm 14 is not limited to a conical-shaped as with the composite diaphragm 14a, but may also have a different shape such as funnel-shape.

The maximum light flux passing space 140a is frustum-shaped when the spot size in the detection region 5 is constant, but may not necessarily be frustum-shaped when the spot size in the detection region 5 varies according to the distance from the principal point P of the lens 18.

The photoelectric sensors 1 and 3 may further include, between the composite diaphragm 14 and the light source 11, light condensing means for condensing the detection light A toward the composite diaphragm 14 (first diaphragm 141). This light condensing means may be, for example, a lens or a reflecting mirror. A region of the light condensing means that can condense light (when the light condensing means is a lens for example, the region corresponds to the effective diameter of the lens. Alternatively, when the light condensing means is a reflecting mirror, the region corresponds to the distance between the optical axis Ax and the light condensing means in the direction that is orthogonal to the optical axis Ax, in the above-described cross section that includes the optical axis Ax) is greater than the above-described third region. Accordingly, since the intensity of the detection light A that passes through the composite diaphragm 14 can be enhanced, it is possible to improve the use efficiency of light emitted from the light source 11. Note that, when the photoelectric sensors 1 and 3 include the light condensing means, the above-described second region is greater, due to the light condensing means, than the second region in the case where the light condensing means is not provided, and thus the effective size of the light source 11 in the above-described cross section including the optical axis Ax increases.

Industrial applicability

According to the present invention, it is possible to provide a photoelectric sensor that can make a detection range for detecting a detection target, in a detection region, smaller than a predetermined size.

LIST OF REFERENCE NUMERALS

| | |
|---|---|
| 1, 3 | Photoelectric sensor |
| 2 | Retro-reflective plate |
| 5 | Detection region |
| 11 | Light source |
| 16 | Light receiving unit |
| 18 | Lens |
| 141 | First diaphragm |
| 142 | Second diaphragm |
| 15 | Semi-transparent plate |
| 140a | Maximum light flux passing space |

**Claims**

1. A photoelectric sensor (1; 3) comprising:

    a light source (11) configured to emit detection light;
    a lens (18) configured to condense light emitted from the light source (11) onto a detection region (5), the lens (18) having a first focal point (Pf) and a second focal point, the first focal point (Pf) being closer to the light source (11) than the second focal point;
    a light receiving unit (16) configured to receive the detection light from the detection region (5); and
    a first diaphragm (141; 141b; 141c) and a second diaphragm (142; 142b; 142c) that are provided between the light source (11) and the lens (18),
    wherein the first diaphragm (141; 141b; 141c) is arranged at a position that is closer to the light source (11) than the second diaphragm (142; 142b; 142c),
    the first diaphragm (141; 141b; 141c) and the second diaphragm (142; 142b; 142c) are arranged closer to the light source (11) than the first focal point (Pf) of the lens (18),
    an aperture of the first diaphragm (141; 141b; 141c) in a cross section that includes an optical axis (Ax) of the lens (18) is larger than an aperture of the second diaphragm (142; 142b; 142c) in the cross section that includes the optical axis (Ax),
    an effective area of the light source (11) in the cross section that includes the optical axis (Ax) is larger than the aperture of the first diaphragm (141; 141b; 141c) in the cross section that includes the optical axis (Ax), and
    an effective area of the lens (18) in the cross section that includes the optical axis (Ax) is larger than the effective area of the light source (11) in the cross section that includes the optical axis (Ax).

2. The photoelectric sensor (1) according to claim 1,
    wherein the photoelectric sensor (1) is a retro-reflective type photoelectric sensor for use in combination with a retro-reflective plate (2), and
    a semi-transparent plate (15) that transmits and reflects respective parts of the detection light from the light source (11) and the detection light from the detection region (5) is provided between the second diaphragm (142; 142b; 142c) and the lens (18).

3. The photoelectric sensor (1; 3) according to claim 1 or 2,
    wherein the first diaphragm (141; 141b; 141c) is attachable to and detachable from the second diaphragm (142; 142b; 142c).

4. The photoelectric sensor (1; 3) according to any one of claims 1 to 3, further comprising:

    light condensing means for condensing the detection light toward the first diaphragm (141; 141b; 141c), the light condensing means being provided between the first diaphragm (141; 141b; 141c) and the light source (11).

5. The photoelectric sensor (1; 3) according to any one of claims 1 to 4,
wherein a thickness of the first diaphragm (141; 141b; 141c), a thickness of the second diaphragm (142; 142b; 142c), a diameter of the aperture of the first diaphragm (141; 141b; 141c), a diameter of the aperture of the second diaphragm (142; 142b; 142c), a distance in the direction of the optical axis (Ax) between a surface on the lens (18) side of the first diaphragm (141; 141b; 141c) and a principal point of the lens (18), and a distance in the direction of the optical axis (Ax) between a surface on the lens (18) side of the second diaphragm (142; 142b; 142c) and the principal point of the lens (18) are such that, of the light beams that are emitted from the two ends (E1, E2) of an effective area of the light source (11) in a cross section that includes the optical axis (Ax) of the lens (18), any light beam that intersects the optical axis (Ax) of the lens (18) and passes by an end (P1, P2) on the lens (18) side of the second diaphragm (142; 142b; 142c) passes through a maximum light flux passing space (140a), which is the maximum space through which the light flux of the detection light can pass, and, of the light beams that are emitted from the two ends (E1, E2) of the effective area of the light source (11) in the cross section that includes the optical axis (Ax) of the lens (18), any light beam that intersects the optical axis (Ax) of the lens (18) and passes by an end (Q1, Q2) on the light source (11) side of the first diaphragm (141; 141b; 141c), or an end (R1, R2) on the light source (11) side of the second diaphragm (142; 142b; 142c) passes through the maximum light flux passing space (140a).

6. The photoelectric sensor (1; 3) according to any one of claims 1 to 5,
wherein the distance (La) in the direction of the optical axis (Ax) between a virtual light source and a principal point (P) of the lens (18) is 1 to 50 mm, the virtual light source being given by an aperture section of a composite diaphragm (14) constituted by the first diaphragm (141; 141b; 141c) and the second diaphragm (142; 142b; 142c) in a cross section (C-C) that is orthogonal to the optical axis (Ax).

7. The photoelectric sensor (1; 3) according to any one of claims 1 to 6,
wherein a virtual light source given by an aperture section of a composite diaphragm (14) constituted by the first diaphragm (141; 141b; 141c) and the second diaphragm (142; 142b; 142c) in a cross section (C-C) that is orthogonal to the optical axis (Ax) has a size (Wa) of 0.05 to 0.8 mm.

8. The photoelectric sensor (1; 3) according to any of claims 5 to 7,
wherein the maximum light flux passing space (140a) forms a circular truncated cone having a height (H) of 0.1 to 1.5 mm.

**Patentansprüche**

1. Photoelektrischer Sensor (1; 3), umfassend:

eine Lichtquelle (11), die dazu eingerichtet ist, Detektionslicht zu emittieren;
eine Linse (18), die dazu eingerichtet ist, Licht, das von der Lichtquelle (11) emittiert wird, auf eine Detektionsregion (5) zu bündeln, wobei die Linse (18) einen ersten Brennpunkt (Pf) und einen zweiten Brennpunkt aufweist, wobei der erste Brennpunkt (Pf) näher an der Lichtquelle (11) als der zweite Brennpunkt ist;
eine Licht empfangende Einheit (16), die dazu eingerichtet ist, das Detektionslicht aus der Detektionsregion (5) zu empfangen; und
eine erste Blende (141; 141b; 141c) und eine zweite Blende (142; 142b; 142c), die zwischen der Lichtquelle (11) und der Linse (18) bereitgestellt sind,
wobei die erste Blende (141; 141b; 141c) an einer Position angeordnet ist, die näher an der Lichtquelle (11) als die zweite Blende (142; 142b; 142c) ist,
die erste Blende (141; 141b; 141c) und die zweite Blende (142; 142b; 142c) näher an der Lichtquelle (11) angeordnet sind als der erste Brennpunkt (Pf) der Linse (18),
eine Blendenöffnung der ersten Blende (141; 141b; 141c) in einem Querschnitt, der eine optische Achse (Ax) der Linse (18) einschließt, größer ist als eine Blendenöffnung der zweiten Blende (142; 142b; 142c) in dem Querschnitt, der die optische Achse (Ax) einschließt,
eine effektive Fläche der Lichtquelle (11) in dem Querschnitt, der die optische Achse (Ax) einschließt, größer ist als die Blendenöffnung der ersten Blende (141; 141b; 141c) in dem Querschnitt, der die optische Achse (Ax) einschließt, und
eine effektive Fläche der Linse (18) in dem Querschnitt, der die optische Achse (Ax) einschließt, größer ist als die effektive Fläche der Lichtquelle (11) in dem Querschnitt, der die optische Achse (Ax) einschließt.

**2.** Photoelektrischer Sensor (1) nach Anspruch 1,
wobei der photoelektrische Sensor (1) ein photoelektrischer Sensor vom retroreflektierenden Typ zur Verwendung in Kombination mit einer retroreflektierenden Platte (2) ist, und
zwischen der zweiten Blende (142; 142b; 142c) und der Linse (18) eine semitransparente Platte (15) vorgesehen ist, die jeweilige Teile des Detektionslichts von der Lichtquelle (11) und des Detektionslichts aus der Detektionsregion (5) durchlässt bzw. reflektiert.

**3.** Photoelektrischer Sensor (1; 3) nach Anspruch 1 oder 2,
wobei die erste Blende (141; 141b; 141c) an der zweiten Blende (142; 142b; 142c) anbringbar und davon lösbar ist.

**4.** Photoelektrischer Sensor (1; 3) nach einem der Ansprüche 1 bis 3, ferner umfassend:

ein Lichtbündelungsmittel zum Bündeln des Detektionslichts in Richtung der ersten Blende (141; 141b; 141c), wobei das Lichtbündelungsmittel zwischen der ersten Blende (141; 141b; 141c) und der Lichtquelle (11) vorgesehen ist.

**5.** Photoelektrischer Sensor (1; 3) nach einem der Ansprüche 1 bis 4,
wobei eine Dicke der ersten Blende (141; 141b; 141c), eine Dicke der zweiten Blende (142; 142b; 142c), ein Durchmesser der Blendenöffnung der ersten Blende (141; 141b; 141c), ein Durchmesser der Blendenöffnung der zweiten Blende (142; 142b; 142c), ein Abstand in der Richtung der optischen Achse (Ax) zwischen einer Oberfläche auf der zur Linse (18) gewandten Seite der ersten Blende (141; 141b; 141c) und einem Hauptpunkt der Linse (18) und ein Abstand in der Richtung der optischen Achse (Ax) zwischen einer Oberfläche auf der zur Linse (18) gewandten Seite der zweiten Blende (142; 142b; 142c) und dem Hauptpunkt der Linse (18) derart sind, dass von den Lichtstrahlen, die von den beiden Enden (E1, E2) einer effektiven Fläche der Lichtquelle (11) in einem Querschnitt, der die optische Achse (Ax) der Linse (18) einschließt, jeder beliebige Lichtstrahl, der die optische Achse (Ax) der Linse (18) schneidet und an einem Ende (P1, P2) auf der zur Linse (18) gewandten Seite der zweiten Blende (142; 142b; 142c) vorbeigeht, durch einen maximalen Lichtstrom-Durchgangsraum (140a) geht, wobei es sich um den maximalen Raum handelt, durch den der Lichtstrom des Detektionslichts gehen kann, und von den Lichtstrahlen, die von den beiden Enden (E1, E2) der effektiven Fläche der Lichtquelle (11) in dem Querschnitt emittiert werden, der die optische Achse (Ax) der Linse (18) einschließt, jeder beliebige Lichtstrahl, der die optische Achse (Ax) der Linse (18) schneidet und an einem Ende (Q1, Q2) auf der zur Lichtquelle (11) gewandten Seite der ersten Blende (141; 141b; 141c) oder ein Ende (R1, R2) auf der zur Lichtquelle (11) gewandten Seite der zweiten Blende (142; 142b; 142c) geht, durch den maximalen Lichtstrom-Durchgangsraum (140a) geht.

**6.** Photoelektrischer Sensor (1; 3) nach einem der Ansprüche 1 bis 5,
wobei der Abstand (La) in der Richtung der optischen Achse (Ax) zwischen einer virtuellen Lichtquelle und einem Hauptpunkt (P) der Linse (18) 1 bis 50 mm ist, wobei die virtuelle Lichtquelle durch einen Blendenöffnungsabschnitt einer durch die erste Blende (141; 141b; 141c) und die zweite Blende (142; 142b; 142c) gebildeten zusammengesetzten Blende (14) in einem Querschnitt (C-C) orthogonal zu der optischen Achse (Ax) gegeben ist.

**7.** Photoelektrischer Sensor (1; 3) nach einem der Ansprüche 1 bis 6,
wobei eine virtuelle Lichtquelle, die durch einen Blendenöffnungsabschnitt einer durch die erste Blende (141; 141b; 141c) und die zweite Blende (142; 142b; 142c) gebildeten zusammengesetzten Blende (14) in einem Querschnitt (C-C) orthogonal zu der optischen Achse (Ax) gegeben ist, eine Größe (Wa) von 0,05 bis 0,8 mm aufweist.

**8.** Photoelektrischer Sensor (1; 3) nach einem der Ansprüche 5 bis 7,
wobei der maximale Lichtstrom-Durchgangsraum (140a) einen Kreiskegelstumpf mit einer Höhe (H) von 0,1 bis 1,5 mm ausbildet.

**Revendications**

**1.** Capteur photoélectrique (1 ; 3) comprenant :

une source de lumière (11) conçue pour émettre une lumière de détection ;
une lentille (18) conçue pour condenser la lumière émise depuis la source de lumière (11) sur une région de détection (5), la lentille (18) ayant un premier point focal (Pf) et un second point focal, le premier point focal (Pf) étant plus proche de la source de lumière (11) que le second point focal ;

une unité de réception de lumière (16) conçue pour recevoir la lumière de détection en provenance de la région de détection (5) ; et

un premier diaphragme (141 ; 141b, 141c) et un second diaphragme (142 ; 142b ; 142c) qui sont placés entre la source de lumière (11) et la lentille (18),

dans lequel le premier diaphragme (141 ; 141b ; 141c) est disposé à une position qui est plus proche de la source de lumière (11) que le second diaphragme (142 ; 142b ; 142c),

le premier diaphragme (141 ; 141b, 141c) et le second diaphragme (142 ; 142b ; 142c) sont disposés plus près de la source de lumière (11) que le premier point focal (Pf) de la lentille (18),

une ouverture du premier diaphragme (141 ; 141b ; 141c) dans une section transversale qui inclut un axe optique (Ax) de la lentille (18) est plus grande qu'une ouverture du second diaphragme (142 ; 142b ; 142c) dans la section transversale qui inclut l'axe optique (Ax),

une section efficace de la source de lumière (11) dans la section transversale qui inclut l'axe optique (Ax) est plus grande que l'ouverture du premier diaphragme (141 ; 141b ; 141c) dans la section transversale qui inclut l'axe optique (Ax), et

une section efficace de la lentille (18) dans la section transversale qui inclut l'axe optique (Ax) est plus grande que la section efficace de la source de lumière (11) dans la section transversale qui inclut l'axe optique (Ax).

**2.** Capteur photoélectrique (1) selon la revendication 1,
dans lequel le capteur photoélectrique (1) est un capteur photoélectrique de type rétro-réfléchissant destiné à être utilisé en association une plaque rétro-réfléchissante (2), et
une plaque semi-transparente (15) qui transmet et réfléchit des parties respectives de la lumière de détection provenant de la source de lumière (11) et de la lumière de détection provenant de la région de détection (5) est placée entre le second diaphragme (142 ; 142b ; 142c) et la lentille (18).

**3.** Capteur photoélectrique (1 ; 3) selon la revendication 1 ou 2,
dans lequel le premier diaphragme (141 ; 141b ; 141c) peut être fixé au second diaphragme (142 ; 142b ; 142c) et en être détaché.

**4.** Capteur photoélectrique (1 ; 3) selon l'une quelconque des revendications 1 à 3, comprenant en outre :

un moyen de condensation de lumière destiné à condenser la lumière de détection vers le premier diaphragme (141 ; 141b ; 141c), le moyen de condensation de lumière étant placé entre le premier diaphragme (141 ; 141b ; 141c) et la source de lumière (11).

**5.** Capteur photoélectrique (1 ; 3) selon l'une quelconque des revendications 1 à 4,
dans lequel une épaisseur du premier diaphragme (141 ; 141b ; 141c), une épaisseur du second diaphragme (142 ; 142b ; 142c), un diamètre de l'ouverture du premier diaphragme (141 ; 141b ; 141c), un diamètre de l'ouverture du second diaphragme (142 ; 142b ; 142c), une distance dans la direction de l'axe optique (Ax) entre une surface du côté lentille (18) du premier diaphragme (141 ; 141b ; 141c) et un point principal de la lentille (18), et une distance dans la direction de l'axe optique (Ax) entre une surface du côté lentille (18) du second diaphragme (142 ; 142b ; 142c) et le point principal de la lentille (18) sont tels que parmi les faisceaux lumineux qui sont émis depuis les deux extrémités (E1, E2) d'une section efficace de la source de lumière (11) dans une section transversale qui inclut l'axe optique (Ax) de la lentille (18), n'importe quel faisceau lumineux qui coupe l'axe optique (Ax) de la lentille (18) et passe devant une extrémité (P1, P2) du côté lentille (18) du second diaphragme (142 ; 142b ; 142c) passe à travers un espace maximal de passage de flux lumineux (140a) qui est l'espace maximal à travers lequel le flux lumineux de la lumière de détection peut passer, et parmi les faisceaux lumineux qui sont émis depuis les deux extrémités (E1, E2) de la section efficace de la source de lumière (11) dans la section transversale qui inclut l'axe optique (Ax) de la lentille (18), n'importe quel faisceau lumineux qui coupe l'axe optique (Ax) de la lentille (18) et passe devant une extrémité (Q1, Q2) du côté source de lumière (11) du premier diaphragme (141 ; 141b ; 141c) ou une extrémité (R1, R2) du côté source de lumière (11) du second diaphragme (142 ; 142b ; 142c) passe à travers l'espace maximal de passage de flux lumineux (140a).

**6.** Capteur photoélectrique (1 ; 3) selon l'une quelconque des revendications 1 à 5,
dans lequel la distance (La) dans la direction de l'axe optique (Ax) entre une source de lumière virtuelle et un point principal (P) de la lentille (18) est de 1 à 50 mm, la source de lumière virtuelle étant donnée par une section d'ouverture d'un diaphragme composite (14) constitué du premier diaphragme (141 ; 141b ; 141c) et du second diaphragme (142 ; 142b ; 142c) dans une section transversale (C-C) qui est orthogonale à l'axe optique (Ax).

7. Capteur photoélectrique (1 ; 3) selon l'une quelconque des revendications 1 à 6,
dans lequel une source de lumière virtuelle donnée par une section d'ouverture d'un diaphragme composite (14) constitué du premier diaphragme (141 ; 141b ; 141c) et du second diaphragme (142 ; 142b ; 142c) dans une section transversale (C-C) qui est orthogonale à l'axe optique (Ax) a une taille (Wa) qui est de 0,05 à 0,8 mm.

8. Capteur photoélectrique (1 ; 3) selon l'une quelconque des revendications 5 à 7,
dans lequel l'espace maximal de passage de flux lumineux (140a) forme un cône circulaire tronqué présentant une hauteur (H) de 0,1 à 1,5 mm.

**FIG. 1**

**FIG. 2**

(a)

(b)

(c)

**FIG. 3**

## FIG. 4

Distance from principal point P

$$\frac{f \cdot L0}{L0-f} \qquad \frac{f \cdot (L0+WL)}{L0+WL-f} \qquad f$$

14a

140a

Wmin

14a

140a

Wmax

Ax

Pf

(a) Front shape

(b) Cross-sectional shape

FIG. 5

EP 2 910 983 B1

Distance from
principal point P

$$\frac{f \cdot L0}{L0-f} \qquad \frac{f \cdot (L0+WL)}{L0+WL-f} \qquad f$$

(a) Front shape          (b) Cross-sectional shape

**FIG. 6**

## FIG. 7

(a) Front shape

(b) Cross-sectional shape

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H616832 U
- US 3759616 A
- DE 4408294 A1
- US 4283146 A